# EUROPEAN PATENT APPLICATION

(11) **EP 3 120 713 A1**
(43) Date of publication of application: **25.01.2017**
(21) Application number: 15765054.0
(22) Date of filing: 16.03.2015
(51) Int. Cl.: A23L 27/10, A23L 27/00, A23L 23/00, A23L 2/00

(54) **METHOD FOR PRODUCING PALM FRUIT EXTRACT, PALM FRUIT EXTRACT, FLAVOR IMPROVING AGENT COMPRISING PALM FRUIT EXTRACT, AND FOODS AND DRINKS CONTAINING FLAVOR IMPROVING AGENT**

(30) Priority: 20.03.2014 JP 2014057998
(71) Applicant: Takasago International Corporation, Tokyo 144-8721 (JP)
(72) Inventor: GOTO, Yukio, Hiratsuka-shi Kanagawa 254-0073 (JP); HIRAMOTO, Tadahiro, Hiratsuka-shi Kanagawa 254-0073 (JP)
(74) Representative: Takeuchi, Maya
(86) International application number: PCT/JP2015/057772
(87) International publication number: WO 2015/141645

(57) **Abstract**

The present invention addresses the problem of providing a palm fruit extract that does not have the characteristic smell of conventional palm fruit extracts and is capable of imparting excellent flavor-improving properties to various kinds of foods and drinks. Provided are: a method for producing a palm fruit extract, said method comprising (a) a step for extracting the albumen of palm fruits with a solvent, and (b) a step for removing smell components from the solvent extract obtained in step (a); and a palm fruit extract obtained by this production method.

## Description

### Technical Field

The present invention relates to a method for producing a coconut extract, a coconut extract obtained by using the method, a flavor improver, and foods or drinks containing the flavor improver.

### Background Art

In order to meet the demand for more tasty foods or drinks, there has been ongoing development of not only substances that enhance or reduce the five basic tastes sweetness, saltiness, bitterness, sourness, and umami, but substances that improve juiciness, oiliness, *koku,* and other such flavors perceived as perceptual psychology sensations.

A wide variety of substances have been used as source materials of such flavor improving substances. By turning attention to techniques involving coconut-derived substances that are available at low cost, a method is available that makes use of a dietary fiber obtained after defatting of a coconut, for example, a method in which a solid obtained after the solid-liquid separation of a coconut endosperm slurry is defatted until the oil and fat content becomes 1 mass% or less, and the defatted product is hydrolyzed to obtain a mannooligosaccharide-containing dietary composition containing 10 mass% or more of mannobiose (PTL 1).

There is also a report of a method that deodorizes coconut oils by means of steam injection in a vacuum to remove the characteristic odor of coconut oils that may be undesirable in several food products blended with coconut (PTL 2). A method for obtaining deodorized oils by means of distillation with the injected inert gas is also reported (PTL 3). However, there is no report of a flavor improver derived from a coconut.

### Citation List

### Patent Literature

PTL 1: WO2008/062813
PTL 2: US Patent No. 6,447,832
PTL 3: US Patent No. 5,374,751

### Summary of Invention

### Technical Problem

It is an object of the present invention to provide a coconut extract that does not have the characteristic odor of coconut, and can impart excellent flavor improving qualities, such as enhancement of milkiness, umami, *koku,* saltiness, sweetness, fruitiness, spiciness, and reduction of sourness, to a variety of foods or drinks. The invention is also intended to provide a method for producing such a coconut extract.

Another object of the present invention is to provide a flavor improver containing the coconut extract having the foregoing desirable qualities.

The present invention relates to a method for producing a coconut extract, a coconut extract obtained by the method, flavor improver comprising the coconut extract, and foods or drinks containing the coconut extract as described in [1] to [11] below.
[1] A method for producing a coconut extract, the method comprising the steps of:
   (a) extracting an endosperm portion of a coconut with a solvent; and
   (b) removing an odor component from the solvent extract obtained in the step (a).
[2] The production method according to [1], wherein the extraction solvent in the step (a) is ethanol, or an aqueous solution of ethanol.
[3] The production method according to [1] or [2], wherein the removal of the odor component in the step (b) is performed by a treatment with an activated carbon.
[4] The production method according to any one of [1] to [3], further comprising the step (c) of adding water to the coconut extract obtained in the step (b), and performing a treatment with a synthetic adsorbent resin, thereby obtaining an unadsorbed fraction.
[5] The production method according to [4], further comprising the step (d) of eluting an adsorbed fraction in the step (c) with a 30 mass% to 70 mass% ethanol aqueous solution, thereby obtaining an eluted fraction.
[6] The production method according to any one of [1] to [3], further comprising the step (e) of adding an aliphatic carboxylic acid ester having 3 to 6 carbon atoms and water to the coconut extract obtained in the step (b) to perform liquid separation, and removing a distillate fraction through vacuum distillation from the aqueous layer obtained, thereby obtaining a residue.
[7] The production method according to [6], wherein the aliphatic carboxylic acid ester having 3 to 6 carbon atoms is ethyl acetate.
[8] The production method according to any one of [1] to [7], wherein the coconut is a Cocos nucifera L. or an Elaeis.
[9] A coconut extract obtained by the method according to any one of [1] to [8].
[10] A flavor improver comprising the coconut extract according to [9].
[11] A food or drink comprising the flavor improver according to [10].

### Advantageous Effects of Invention

The method for producing a coconut extract of the present invention can easily produce a coconut extract using the coconut endosperm, including a commercially available coconut juice, or processed products of the coconut endosperm (for example, such as coconut copra, palm kernel, and coconut milk).

The flavor improver containing the coconut extract of the present invention can be added to a wide range of foods or drinks, and, with no characteristic odor of the coconut, can enhance sensations such as milkiness, umami, *koku,* saltiness, sweetness, fruitiness, and spiciness, and reduce sourness. The flavor improver can thus improve flavor qualities involved in a range of palatability.

### Description of Embodiments

The present invention is described below in detail. As used herein, "mass" means "weight".

Examples of the coconut that can be used in the present invention include Cocos nucifera L., and Elaeis. The endosperm portion of a Cocos nucifera L. may be a coconut juice as a liquid endosperm of an immature Cocos nucifera L., coconut copra as a dried endosperm portion, or coconut milk prepared by squeezing the endosperm or coconut copra of a mature fruit soaked with water. The endosperm portion of an Elaeis may be a palm kernel obtained after drying the endosperm.

The coconut extract of the present invention may be produced with the endosperm portion of a coconut, the endosperm of an unprocessed coconut such as coconut juice, or commercially available processed products of coconut endosperm such as coconut copra and coconut milk.

A method for producing a coconut extract of the present invention is described below.

The method for producing a coconut extract of the present invention includes at least (a) the step of extracting an endosperm portion of a coconut with a solvent, and (b) the step of removing an odor component from the solvent extract obtained in the step (a).

### Step (a): Step of Extracting Endosperm Portion of Coconut with Solvent

Examples of the extraction solvent used in the step (a) include water, acetone, ethanol, glycerine, ethyl acetate, methyl acetate, methanol, 1-propanol, 2-propanol, 1-butanol, 2-butanol, propylene glycol, and carbon dioxide. These may used either alone or in a combination of two or more. From the viewpoint of safety of the residual solvent, it is preferable to use water or ethanol, further preferably ethanol, or an aqueous solution of ethanol. The ethanol aqueous solution is preferably 20 mass% to 80 mass% ethanol, more preferably 50 mass% ethanol.

Water is not particularly limited, and may be, for example, ultrapure water, ion-exchange water, reverse osmosis (RO) membrane filtered water, distilled water, or tap water. Ion-exchange water is preferred from the viewpoint of food or drink production.

The solvent extraction temperature is not particularly limited, and is preferably 15°C to 90°C, further preferably 40°C to 70°C. The extraction temperature is preferably 15°C or more because it improves the extraction efficiency. An extraction temperature of 90°C or less is preferable because it reduces extract deterioration due to heat.

The extraction time is not particularly limited, and is preferably 30 minutes to 20 hours, further preferably 1 hour to 5 hours. The extraction time is preferably 30 minutes or more because it stabilizes the extract yield. An extraction time of 20 hours or less is preferable because it reduces extract deterioration due to oxidation.

The extraction pressure is not particularly limited, and extraction may be performed under any of normal pressure conditions, reduced pressure conditions, and applied pressure conditions. Preferably, the extraction is performed under normal pressure conditions.

The extraction is followed by solid-liquid separation of the extract using procedures such as centrifugation, and filtration. By removing the solid, the operability of the subsequent steps can improve.

### Step (b): Step of Removing Odor Component from Solvent Extract

A coconut-derived odor component (e.g., δ-octalactone) is removed from the solvent extract obtained in the step (a). δ-Octalactone has a coconut-like odor. By removing such an odor component from the coconut extract, the extract does not cause an unpleasant sensation in a flavor evaluation after being blended in various foods or drinks.

The method for removing the odor component is not particularly limited, and methods commonly used for the removal of an odor component may be used. Examples of such methods include adsorption, liquid-liquid extraction, supercritical fluid extraction, distillation/concentration, and membrane separation. These may be used alone or in a combination of two or more. From the viewpoint of saving manufacturing cost, it is preferable to use distillation/concentration, adsorption, or liquid-liquid extraction. A combination of these methods is more preferred.

The odor adsorbent used for adsorption is not particularly limited. Examples include activated carbon, silica gel, alumina, zeolite, synthetic adsorbent resins, ion-exchange resins, porous glass, and cyclodextrin. Activated carbon, and synthetic adsorbents are preferred. Activated carbon is further preferred.

Liquid-liquid extraction may be performed by adding water and an organic solvent to the solvent extract, and removing the organic solvent layer portion. The organic solvent is not particularly limited, and may be, for example, ethyl acetate, or hexane.

Distillation/concentration may be performed by evaporating and concentrating the solvent extract under reduced pressure, or by separating the solvent extract by distillation, and removing the distillate.

In the production method of the present invention, it is preferable to purify the coconut extract obtained after steps (a) and (b). The purification step may be, for example, purification with a synthetic adsorbent resin, or purification by liquid-liquid extraction.

### Steps (c) and (d): Treatment Step with Synthetic Adsorbent Resin

The synthetic adsorbent resin used in step(c) may be, for example, an adsorbent made of an aromatic resin, an acrylic resin, or an acrylonitrile resin. Such synthetic resin adsorbents are commercially available, including, for example, aromatic resins available under the trade names Diaion HP20, HP21, and Sepabeads SP70 (all manufactured by Mitsubishi Chemical Corporation), aromatic high-surface-area type resins available under the trade names Sepabeads SP825, SP850, and SP700 (all manufactured by Mitsubishi Chemical Corporation), aromatic modified resins available under the trade name Sepabeads SP207 (manufactured by Mitsubishi Chemical Corporation), aromatic small-particle-size resins available under the trade names Diaion HP20SS, and Sepabeads SP20SS and SP207SS (all manufactured by Mitsubishi Chemical Corporation), styrene resins available under the trade names Amberlite XAD2, XAD4, FPX66, XAD1180, XAD1180N, and XAD2000 (all manufactured by Organo Corporation), acrylic resins available under the trade name Diaion HP2MG (manufactured by Mitsubishi Chemical Corporation), Amberlite XAD7HP (manufactured by Organo Corporation), and a crosslinked dextran derivative available under the trade name Sephadex LH20 (manufactured by GE Healthcare Japan).

The method of the present invention is performed by diluting the coconut extract obtained in the step (b) with water or other such diluent, and passing the dilute solution through an adsorbent such as above to obtain an unadsorbed fraction. The dilute concentration may be adjusted to make the viscosity of the dilute solution small, and may be preferably, for example, 0.1 mass% to 50 mass%.

The method of the present invention also may be performed by removing the adsorbed fraction with an ethanol aqueous solution through elution (step (d)). From the viewpoint of the flavor improving effect of the product flavor improver, the ethanol aqueous solution used is preferably a 20 mass% to 80 mass% ethanol aqueous solution, more preferably a 30 mass% to 70 mass% ethanol aqueous solution.

### Step (e): Treatment Step by Liquid-Liquid Extraction

For treatment by liquid-liquid extraction, a aliphatic carboxylic acid ester having 3 to 6 carbon atoms and water are added to the coconut extract obtained in the step (b), and the separated aqueous layer is subjected to vacuum distillation to remove the distillate fraction, and obtain the residue.

Examples of the aliphatic carboxylic acid ester having 3 to 6 carbon atoms used include methyl acetate, ethyl acetate, propyl acetate, butyl acetate, ethyl propionate, methyl butyrate, and ethyl butyrate. Preferred is ethyl acetate. The odor component can be removed with the use of the aliphatic carboxylic acid ester having 3 to 6 carbon atoms.

From the viewpoint of reducing heat degradation, the vacuum distillation condition is preferably 120 torr/40°C to 460 torr/80°C. Here, the unit of pressure 1 torr = 133.3 Pa.

The coconut extract obtained by using the method of the present invention may be further concentrated using other known means, such as membrane concentration, and may be pulverized using known drying means such as freeze drying, and hot-air drying.

The coconut extract obtained by using the foregoing method is contained as an active ingredient of the flavor improver of the present invention.

The concentration of the coconut extract in the flavor improver depends on the kind of food or drink to which the flavor improver is added, and the purpose of adding the flavor improver to food or drink. The coconut extract concentration in the flavor improver ranges preferably from 0.1 mass% to 100 mass%, further preferably 30 mass% to 100 mass% in terms of a soluble solid.

The flavor improver of the present invention may contain other components, provided that such additional components do not interfere with the effects of the active ingredient coconut extract of the present invention.

Examples of the additional components include: additives that can be used for food or drink, including flavorings (artificial flavorings, natural flavorings, and prepared flavorings), sweeteners (such as acesulfame potassium, stevia, and erythritol), acidulants (such as citric acid, tartaric acid, phosphoric acid, and lactic acid), bittering agents (such as caffeine, and naringin), seasonings (such as sodium glutamate, and L-arginine), colorings (such as chlorophyllin, a grape skin pigment, a safflower red pigment, food red 102, and sodium copper chlorophyllin), preservatives (such as benzoic acid, and sorbic acid), thickening agents (such as carrageenan, xanthan gum, guar gum, dextran, and pullulan), emulsifiers (such as quillaia extracts, enzyme degraded lecithin, glycerin fatty acid esters, sucrose fatty acid esters, and polysorbate 60), production materials (such as sodium bicarbonate, potassium carbonate, and magnesium carbonate), antioxidants (such as catechin, quercetin, tea extracts, green coffee bean extracts, d-α-tocopherol, and ethylenediaminetetraacetic acid calcium disodium), chromogenic agents (such as potassium nitrate, and sodium nitrate), brightening agents (such as carnauba wax, lanolin, and paraffin wax), bleaching agents (such as calcium acetate, and sodium hyposulfite), and enzymes (such as lipase, pectinase, polyphenoloxydase, and protease). Other Examples include carriers (such as dextrin, gum arabic, corn starch, and processed starch), spices (such as mint, pepper, Japanese basil, garlic, and ginger), mineral salts (such as sodium chloride, and potassium chloride), and other flavor improvers (such as flavor improving peptides, and fruit juice-derived fractions).

A food or drink with improved flavors can be produced when the flavor improver containing the coconut extract obtained by using the present invention is added to a food or drink. Specifically, it is possible to enhance flavors such as milkiness, umami, *koku,* saltiness, sweetness, fruitiness, and spiciness, and to reduce sourness. This makes the coconut extract of the present invention useful as a flavor improver for food or drink.

The flavor improver may be added to food or drink in amounts that are not detrimental to the original flavor, preferably 10 mass ppb to 5 mass%, further preferably 100 mass ppb to 1 mass% in terms of a soluble solid content of the extract.

The flavor improver containing the coconut extract of the present invention may be added to any food or drink, including, for example, drinks such as fruit juice, carbonated drinks, milk beverages, vinegar drinks, soft drinks, milk, lactobacillus beverages, and soy milk; soups such as *dashi*, Chinese soup, stew, and curry; processed foods prepared from materials such as meat, chicken, and fishery products; seasonings, dried seasoning powders, instant food products, snacks, canned food products, dairy products, sweets, and frozen desserts.

### Examples

The present invention is described below in greater detail with reference to Examples. The present invention, however, is in no way limited by the following Examples.

### Example 1: Coconut Copra Extract

To 400 g of a dry coconut copra powder (made in The Philippines) was added 2,000 g of a 50 mass% ethanol aqueous solution, and the mixture was stirred at 60°C for 1 h for extraction. After being cooled to room temperature, the mixture was centrifuged for solid-liquid separation, and 1,560 g of an extract was obtained. The extract was allowed to stand overnight at 5°C, and the generated sediment was removed by filtration through filter paper. The filtrate was evaporated and concentrated under reduced pressure (255 torr/60°C) to remove the solvent, and thus the odor component, and 50 g of a coconut copra extract was obtained.

### Example 2: Coconut Copra Extract

40 g of the coconut copra extract obtained in Example 1 was diluted with 560 ml of ion-exchange water to prepare a Brix 4, and passed through a column at a rate of SV = 3/h to obtain a resin treated solution as the unadsorbed fraction after charging the column with a synthetic adsorbent Diaion HP20 (manufactured by Mitsubishi Chemical Corporation) . The resin treated solution was evaporated and concentrated under reduced pressure (255 torr/60°C) to obtain 10 g of a coconut copra extract.

### Example 3: Coconut Copra Extract

Through the column that had had the coconut copra extract passed through it in Example 2, 500 ml of a 30 mass% ethanol aqueous solution was passed at a rate of SV = 2/h to obtain an eluent. The eluent was evaporated and concentrated under reduced pressure (255 torr/60°C) to completely remove the solvent, and 8 g of ion-exchange water was added to dissolve the solid, and obtain 10 g of a coconut copra extract.

### Example 4: Coconut Copra Extract

Through the column that had had the 30 mass% ethanol aqueous solution passed through it in Example 3, 500 ml of a 70 mass% ethanol aqueous solution was passed at a rate of SV = 2/h to obtain an eluent. The eluent was evaporated and concentrated under reduced pressure (255 torr/60°C) to completely remove the solvent, and 9.5 g of ion-exchange water was added to dissolve the solid, and obtain 10 g of a coconut copra extract fraction.

### Example 5: Coconut Copra Extract

To 100 g of a dry coconut copra powder (made in The Philippines) was added 500 g of a 50 mass% ethanol aqueous solution, and the mixture was stirred at 60°C for 1 h for extraction. After being cooled to room temperature, the mixture was centrifuged for solid-liquid separation, and 410 g of an extract was obtained. The extract was allowed to stand overnight at 5°C, and the generated sediment was removed by filtration through filter paper. Thereafter, 5 mass% of activated carbon (granular Shirasagi, manufactured by Japan EnviroChemicals, Limited) was added to the filtrate, and the mixture was stirred at room temperature for 1 h. The activated carbon was then removed by filtration through filter paper to obtain 350 g of coconut copra extract treated with activated carbon.

### Example 6: Coconut Copra Extract

To 100 g of a dry coconut copra powder (made in The Philippines) was added 500 g of a 50 mass% ethanol aqueous solution, and the mixture was stirred at 60°C for 1 h for extraction. After being cooled to room temperature, the mixture was centrifuged for solid-liquid separation, and 410 g of an extract was obtained. The extract was allowed to stand overnight at 5°C, and the generated sediment was removed by filtration through filter paper to obtain a filtrate. The filtrate was evaporated and concentrated under reduced pressure (255 torr/60°C) to completely remove the solvent, and 100 g of ion-exchange water was added to dissolve the solid. This was followed by liquid-liquid extraction, which was performed by adding 100 g of ethyl acetate. The resulting aqueous layer was evaporated and concentrated under reduced pressure (255 torr/60°C) to completely remove the solvent, and 7 g of ion-exchange water was added to dissolve the solid, and obtain 10 g of a coconut copra extract fraction treated by liquid-liquid extraction.

### Example 7: Coconut Milk Powder Extract

To 100 g of a coconut milk powder (made in The Philippines) was added 500 g of a 50 mass% ethanol aqueous solution, and the mixture was stirred at 60°C for 1 h for extraction. After being cooled to room temperature, the mixture was centrifuged for solid-liquid separation, and 400 g of an extract was obtained. The extract was allowed to stand overnight at 5°C, and the generated sediment was removed by filtration through filter paper. The filtrate was evaporated and concentrated under reduced pressure (255 torr/60°C) to completely remove the solvent, and 50 g of ion-exchange water was added to dissolve the solid. The resulting aqueous solution was passed through a column at SV = 2/h after charging the column with activated carbon (granular Shirasagi, manufactured by Japan EnviroChemicals, Limited). After collecting the unadsorbed fraction, the activated carbon was removed by filtration through filter paper to obtain 40 g of a coconut milk powder extract treated with activated carbon.

### Comparative Example 1: Coconut Copra Extract

To 100 g of a dry coconut copra powder (made in The Philippines) was added 500 g of a 50 mass% ethanol aqueous solution, and the mixture was stirred at 60°C for 1 h for extraction. After being cooled to room temperature, the mixture was centrifuged for solid-liquid separation, and 410 g of an extract was obtained. The extract was allowed to stand overnight at 5°C, and the generated sediment was removed by filtration through filter paper to obtain 370 g of a coconut copra extract.

### Examples 9 to 12: Preparation of Flavor-Improved Low-Salt Mentsuyu

### (condiment for noodles)

The coconut copra extracts prepared in Examples 1, 2, 5, and 6 above were each added to commercially available low-salt mentsuyu (50% salt free) in an amount of 20 mass ppm in terms of a soluble solid to obtain flavor-improved low-salt mentsuyu.

### Test Example 1: Sensory Evaluation

The flavor-improved low-salt mentsuyu of Examples 9 to 12 were evaluated by sensory evaluation according to the following procedures.

### Procedures

The flavor-improved low-salt mentsuyu of Examples 9 to 12, and a control sample (low-salt mentsuyu unblended with the coconut copra extract) were tasted, and the flavor-improved low-salt mentsuyu samples of Examples 9 to 12 were evaluated in a sensory evaluation performed according to the evaluation criteria shown in Table 1. The evaluation was made by 9 trained panelists, and scored by calculating the mean value.

The results of sensory evaluation are presented in Table 2.

[Table 1]

**Table 1**

| Evaluation Criteria | Score |
|---|---|
| Considerably strong/considerably tasty | 9 |
| Very strong/Tasty | 8 |
| Moderately strong/moderately tasty | 7 |
| Little strong/little tasty | 6 |
| Neither (same as control) | 5 |
| Little weak/little distasteful | 4 |
| Moderately weak/moderately distasteful | 3 |
| Very weak/distasteful | 2 |
| Considerably weak/considerably distasteful | 1 |

[Table 2]

**Table 2**

| Sample | Coconut extract | Umami | *koku* | Saltiness | Palatability | Comments |
|---|---|---|---|---|---|---|
| Control | - | 5 | 5 | 5 | 5 | - |
| Ex. 9 | Ex. 1 | 7 | 7 | 8 | 8 | Enhanced rich sensation |
| Ex. 10 | Ex. 2 | 6 | 6 | 8 | 7 | Enhanced saltiness |
| Ex. 11 | Ex. 5 | 6 | 8 | 7 | 8 | Rich flavor |
| Ex. 12 | Ex. 6 | 7 | 7 | 8 | 7 | Enhanced saltiness |

### Examples 13 to 16: Preparation of Flavor-Improved Low-Salt Miso Soup

The coconut copra extracts prepared in Examples 1, 2, 5, and 6 above were each added to a commercially available low-salt miso soup (40% salt free) in an amount of 40 mass ppm in terms of a soluble solid to obtain a flavor-improved low-salt miso soup.

### Comparative Example 2: Preparation of Miso Soup

The coconut copra extract prepared in Comparative Example 1 was added to a commercially available miso soup (40% salt free) in an amount of 40 mass ppm in terms of a soluble solid to obtain a miso soup of Comparative Example 2.

### Test Example 2: Sensory Evaluation

The low-salt miso soups prepared in Examples 13 to 16, and in Comparative Example 2 were evaluated by sensory evaluation using the same procedures used in Test Example 1. A commercially available low-salt miso soup, unblended with the coconut copra extract, was used as a control sample.

The results of sensory evaluation are presented in Table 3.

[Table 3]

**Table 3**

| Sample | Coconut extract | Umami | *koku* | Saltiness | Palatability | Comments |
|---|---|---|---|---|---|---|
| Control | - | 5 | 5 | 5 | 5 | - |
| Com. Ex. 2 | Com. Ex. 1 | 6 | 4 | 6 | 3 | Strange flavor |
| Ex. 13 | Ex. 1 | 7 | 6 | 8 | 8 | Enhanced saltiness |
| Ex. 14 | Ex. 2 | 6 | 5 | 7 | 7 | Enhanced saltiness |
| Ex. 15 | Ex. 5 | 6 | 6 | 7 | 7 | Enhanced saltiness |
| Ex. 16 | Ex. 6 | 6 | 5 | 7 | 7 | Enhanced saltiness |

### Examples 17 to 21: Preparation of Flavor-Improved Retort Curry

The coconut copra extracts prepared in Examples 1 to 3, 5, and 6 were each added to a commercially available retort curry in an amount of 1,000 mass ppm in terms of a soluble solid to obtain a flavor-improved retort curry.

### Comparative Example 3: Preparation of Retort Curry

The coconut copra extract prepared in Comparative Example 1 was added to a commercially available retort curry in an amount of 1,000 mass ppm in terms of a soluble solid to obtain a retort curry of Comparative Example 3.

### Test Example 3: Sensory Evaluation

The retort curries prepared in Examples 17 to 21, and in Comparative Example 3 were evaluated by sensory evaluation using the same procedures used in Test Example 1. A commercially available retort curry, unblended with the coconut copra extract, was used as a control sample.

The results of sensory evaluation are presented in Table 4.

[Table 4]

**Table 4**

| Sample | Coconut extract | Richness | Spiciness | Palatability | Comments |
|---|---|---|---|---|---|
| Control | - | 5 | 5 | 5 | - |
| Com. Ex. 3 | Com. Ex. 1 | 6 | 4 | 4 | Poor spiciness |
| Ex. 17 | Ex. 1 | 7 | 8 | 8 | Rich flavor |
| Ex. 18 | Ex. 2 | 6 | 6 | 7 | Good flavor balance |
| Ex. 19 | Ex. 3 | 6 | 8 | 7 | Enhanced spiciness |
| Ex. 20 | Ex. 5 | 7 | 7 | 7 | Rich flavor |
| Ex. 21 | Ex. 6 | 8 | 7 | 8 | *koku* sensation |

### Examples 22 and 23: Preparation of Flavor-Improved Cream Stew

The coconut copra extracts prepared in Examples 3 and 4 were each added to a commercially available cream stew in an amount of 100 mass ppm in terms of a soluble solid to obtain a flavor-improved cream stew.

### Comparative Example 4: Preparation of Cream Stew

The coconut copra extract prepared in Comparative Example 1 was added to a commercially available cream stew in an amount of 100 mass ppm in terms of a soluble solid to obtain a cream stew of Comparative Example 4.

### Test Example 4: Sensory Evaluation

The cream stews prepared in Examples 22, 23, and in Comparative Example 4 were evaluated by sensory evaluation using the same procedures used in Test Example 1. A commercially available cream stew, unblended with the coconut copra extract, was used as a control sample.

The results of sensory evaluation are presented in Table 5.

[Table 5]

**Table 5**

| Sample | Coconut extract | Richness | Milkiness | Palatability | Comments |
|---|---|---|---|---|---|
| Control | - | 5 | 5 | 5 | - |
| Com. Ex. 4 | Com. Ex. 1 | 5 | 7 | 4 | Artificial sensation of milkiness |
| Ex. 22 | Ex. 3 | 7 | 7 | 7 | Enhanced richness |
| Ex. 23 | Ex. 4 | 6 | 8 | 8 | Clear, distinct flavor |

### Examples 24 to 30: Preparation of Flavor-Improved 50% Orange Juice Drink

The coconut copra extracts prepared in Examples 1 to 6, and the coconut milk powder extract prepared in Example 7 were each added to a commercially available 50% orange juice drink in an amount of 10 mass ppm in terms of a soluble solid to obtain a flavor-improved 50% orange juice drink.

### Comparative Example 5: Preparation of 50% Orange Juice Drink

The coconut copra extract prepared in Comparative Example 1 was added to a commercially available 50% orange juice drink in an amount of 10 mass ppm in terms of a soluble solid to obtain a 50% orange juice drink of Comparative Example 5.

### Test Example 5: Sensory Evaluation

The 50% orange juice drinks prepared in Examples 24 to 30, and in Comparative Example 5 were evaluated by sensory evaluation using the same procedures used in Test Example 1. A commercially available 50% orange juice drink, unblended with the coconut extract, was used as a control sample.

The results of sensory evaluation are presented in Table 6.

[Table 6]

**Table 6**

| Sample | Coconut extract | Sweetness | Fruitiness | Palatability | Comments |
|---|---|---|---|---|---|
| Control | - | 5 | 5 | 5 | - |
| Com. Ex. 5 | Com. Ex. 1 | 7 | 4 | 3 | Strange odor |
| Ex. 24 | Ex. 1 | 8 | 6 | 7 | Enhanced sweetness |
| Ex. 25 | Ex. 2 | 7 | 7 | 7 | Mild sourness |
| Ex. 26 | Ex. 3 | 6 | 8 | 8 | Sharp sourness |
| Ex. 27 | Ex. 4 | 6 | 8 | 8 | Enhanced fruitiness |
| Ex. 28 | Ex. 5 | 6 | 7 | 7 | Mild sourness |
| Ex. 29 | Ex. 6 | 7 | 8 | 7 | Bodied sensation |
| Ex. 30 | Ex. 7 | 7 | 7 | 7 | Mild sourness |

### Examples 31 and 32: Preparation of Flavor-Improved Cafe Au Lait Drink

The coconut copra extracts prepared in Examples 3 and 4 were each added to a commercially available cafe au lait drink in an amount of 20 mass ppm in terms of a soluble solid to obtain a flavor-improved cafe au lait drink.

### Comparative Example 6: Preparation of Cafe Au Lait Drink

The coconut copra extract prepared in Comparative Example 1 was added to a commercially available cafe au lait drink in an amount of 20 mass ppm in terms of a soluble solid to obtain a cafe au lait drink of Comparative Example 6.

### Test Example 6: Sensory Evaluation

The cafe au lait drinks prepared in Examples 31 and 32, and in Comparative Example 6 were evaluated by sensory evaluation using the same procedures used in Test Example 1. A commercially available cafe au lait drink, unblended with the coconut copra extract, was used as a control sample.

The results of sensory evaluation are presented in Table 7.

[Table 7]

**Table 7**

| Sample | Coconut extract | Richness | Bitterness | Palatability | Comments |
|---|---|---|---|---|---|
| Control | - | 5 | 5 | 5 | - |
| Com. Ex. 6 | Com. Ex. 1 | 5 | 4 | 4 | Strange odor |
| Ex. 31 | Ex. 3 | 7 | 6 | 7 | Enhanced richness |
| Ex. 32 | Ex. 4 | 8 | 6 | 7 | Improved persistence |

### Examples 33 to 39: Preparation of Flavor-Improved Zero-Calorie Cola Drink

The coconut copra extracts prepared in Examples 1 to 6, and the coconut milk powder extract prepared in Example 7 were each added to a commercially available zero-calorie cola drink in an amount of 20 mass ppm in terms of a soluble solid to obtain a flavor-improved zero-calorie cola drink.

### Comparative Example 7: Preparation of Zero-Calorie Cola Drink

The coconut copra extract prepared in Comparative Example 1 was added to a commercially available zero-calorie cola drink in an amount of 20 mass ppm in terms of a soluble solid to obtain a zero-calorie cola drink of Comparative Example 7.

### Test Example 7: Sensory Evaluation

The zero-calorie cola drinks prepared in Examples 33 to 39, and in Comparative Example 7 were evaluated by sensory evaluation using the same procedures used in Test Example 1. A commercially available zero-calorie cola drink, unblended with the coconut extract, was used as a control sample.

The results of sensory evaluation are presented in Table 8.

[Table 8]

**Table 8**

| Sample | Coconut extract | Depth of taste | Sweetness | Palatability | Comments |
|---|---|---|---|---|---|
| Control | - | 5 | 5 | 5 | - |
| Com. Ex. 7 | Com. Ex. 1 | 5 | 5 | 3 | Strange odor |
| Ex. 33 | Ex. 1 | 7 | 7 | 7 | Mild taste |
| Ex. 34 | Ex. 2 | 8 | 6 | 8 | Rich flavor |
| Ex. 35 | Ex. 3 | 6 | 6 | 7 | Sharp taste |
| Ex. 36 | Ex. 4 | 6 | 5 | 8 | Sharp taste |
| Ex. 37 | Ex. 5 | 8 | 6 | 7 | Bodied sensation |
| Ex. 38 | Ex. 6 | 7 | 7 | 7 | Thick flavor |
| Ex. 39 | Ex. 7 | 8 | 6 | 8 | Bodied sensation |

### Example 40: Preparation of Flavor-Improved Sugar-Free Black Coffee Drink

The coconut copra extract prepared in Example 2 was added to a commercially available sugar-free black coffee drink in an amount of 20 mass ppm in terms of a soluble solid to obtain a flavor-improved sugar-free black coffee drink.

### Comparative Example 8: Preparation of Sugar-Free Black Coffee Drink

The coconut copra extract prepared in Comparative Example 1 was added to a commercially available sugar-free black coffee drink in an amount of 20 mass ppm in terms of a soluble solid to obtain a sugar-free black coffee drink of Comparative Example 8.

### Test Example 8: Sensory Evaluation

The sugar-free black coffee drinks prepared in Examples 40 and in Comparative Example 8 were evaluated by sensory evaluation using the same procedures used in Test Example 1. A commercially available sugar-free black coffee drink, unblended with the coconut copra extract, was used as a control sample.

The results of sensory evaluation are presented in Table 9.

[Table 9]

**Table 9**

| Sample | Richness | Bitterness | Palatability | Comments |
|---|---|---|---|---|
| Control | 5 | 5 | 5 | - |
| Com. Ex. 8 | 3 | 5 | 3 | Strange odor |
| Ex. 40 | 7 | 6 | 7 | Deep taste |

### Examples 41 to 45: Preparation of Flavor-Improved Vinegar Drink

The coconut copra extracts prepared in Examples 1, 2, 5, and 6, and the coconut milk powder extract prepared in Example 7 were each added to a solution of commercially available apple cider vinegar diluted 15 times in water in an amount of 20 mass ppm in terms of a soluble solid to obtain a flavor-improved vinegar drink.

### Comparative Example 9: Preparation of Vinegar Drink

The coconut copra extract prepared in Comparative Example 1 was added to a solution of commercially available apple cider vinegar diluted 15 times in water in an amount of 20 mass ppm in terms of a soluble solid to obtain a vinegar drink of Comparative Example 9.

### Test Example 9: Sensory Evaluation

The vinegar drinks prepared in Examples 41 to 45, and in Comparative Example 9 were evaluated by sensory evaluation using the same procedures used in Test Example 1. A commercially available apple cider vinegar diluted 15 times in water, unblended with the coconut extract, was used as a control sample.

The results of sensory evaluation are presented in Table 10.

[Table 10]

**Table 10**

| Sample | Coconut extract | Richness | Sourness | Palatability | Comments |
|---|---|---|---|---|---|
| Control | - | 5 | 5 | 5 | - |
| Com. Ex. 9 | Com. Ex. 1 | 4 | 2 | 3 | Strange odor |
| Ex. 41 | Ex. 1 | 7 | 2 | 8 | Mild sour pungency |
| Ex. 42 | Ex. 2 | 8 | 2 | 8 | Mild sour pungency |
| Ex. 43 | Ex. 5 | 8 | 2 | 8 | Mild sour pungency |
| Ex. 44 | Ex. 6 | 7 | 3 | 8 | Mild sour pungency |
| Ex. 45 | Ex. 7 | 8 | 2 | 8 | Mild sour pungency |

### Examples 46 to 52: Preparation of Flavor-Improved Icecream

The coconut copra extracts prepared in Examples 1 to 6, and the coconut milk powder extract prepared in Example 7 were each added to a commercially available vanilla flavored icecream in an amount of 100 mass ppm in terms of a soluble solid to obtain a flavor-improved icecream.

### Comparative Example 10: Preparation of Icecream

The coconut copra extract prepared in Comparative Example 1 was added to a commercially available vanilla flavored icecream in an amount of 100 mass ppm in terms of a soluble solid to obtain an icecream of Comparative Example 10.

### Test Example 10: Sensory Evaluation

The icecreams prepared in Examples 46 to 52, and in Comparative Example 10 were evaluated by sensory evaluation using the same procedures used in Test Example 1. A commercially available vanilla flavored icecream, unblended with the coconut extract, was used as a control sample.

The results of sensory evaluation are presented in Table 11.

[Table 11]

**Table 11**

| Sample | Coconut extract | Milkiness | Fattiness | Freeze odor | Palatability | Comments |
|---|---|---|---|---|---|---|
| Control | - | 5 | 5 | 5 | 5 | - |
| Com. Ex. 10 | Com. Ex. 1 | 6 | 7 | 2 | 6 | Artificial odor sensation |
| Ex. 46 | Ex. 1 | 8 | 7 | 2 | 9 | Enhanced vanilla sensation |
| Ex. 47 | Ex. 2 | 8 | 8 | 2 | 9 | Strong aftertaste |
| Ex. 48 | Ex. 3 | 7 | 8 | 1 | 8 | Strong aftertaste |
| Ex. 49 | Ex. 4 | 7 | 6 | 2 | 8 | Mild taste |
| Ex. 50 | Ex. 5 | 8 | 7 | 3 | 8 | Enhanced rich sensation |
| Ex. 51 | Ex. 6 | 8 | 7 | 2 | 9 | Enhanced rich sensation |
| Ex. 52 | Ex. 7 | 8 | 8 | 2 | 8 | Enhanced rich sensation |

The results of the sensory tests above showed that blending the coconut extracts of Examples 1 to 7 was effective at enhancing specific flavors, and reducing sourness in the all foods and drinks tested. On the other hand, the coconut-derived odor had undesirable effects on the overall taste of food or drink when the coconut copra extract of Comparative Example 1 was blended. These results confirmed that the coconut extract of the present invention has a wide range of applications, and provides a desirable flavor improving effect.

While the present invention has been described in detail and with reference to certain embodiments of the invention, it will be apparent to a skilled person that various changes and modifications may be made thereto without departing from the spirit and scope of the invention. This patent application is based on Japanese Patent Application No. 2014-057998 filed March 20, 2014, the contents of which are hereby incorporated by reference.

## Claims

1. A method for producing a coconut extract, the method comprising the steps of:
(a) extracting an endosperm portion of a coconut with a solvent; and
(b) removing an odor component from the solvent extract obtained in the step (a).

2. The production method according to claim 1, wherein the extraction solvent in the step (a) is ethanol, or an aqueous solution of ethanol.

3. The production method according to claim 1 or 2, wherein the removal of the odor component in the step (b) is performed by a treatment with an activated carbon.

4. The production method according to any one of claims 1 to 3, further comprising the step (c) of adding water to the coconut extract obtained in the step (b), and performing a treatment with a synthetic adsorbent resin, thereby obtaining an unadsorbed fraction.

5. The production method according to claim 4, further comprising the step (d) of eluting an adsorbed fraction in the step (c) with a 30 mass% to 70 mass% ethanol aqueous solution, thereby obtaining an eluted fraction.

6. The production method according to any one of claims 1 to 3, further comprising the step (e) of adding an aliphatic carboxylic acid ester having 3 to 6 carbon atoms and water to the coconut extract obtained in the step (b) to perform liquid separation, and removing a distillate fraction through vacuum distillation from the aqueous layer obtained, thereby obtaining a residue.

7. The production method according to claim 6, wherein the aliphatic carboxylic acid ester having 3 to 6 carbon atoms is ethyl acetate.

8. The production method according to any one of claims 1 to 7, wherein the coconut is a Cocos nucifera L. or an Elaeis.

9. A coconut extract obtained by the method according to any one of claims 1 to 8.

10. A flavor improver comprising the coconut extract according to claim 9.

11. A food or drink comprising the flavor improver according to claim 10.
